# EUROPEAN PATENT SPECIFICATION

(11) **EP 1 500 251 B1**
(45) Date of publication and mention of the grant of the patent: **12.07.2006**
(21) Application number: 03712566.3
(22) Date of filing: 14.04.2003
(51) Int. Cl.: H04L 29/12

(54) **METHOD FOR ADDRESS CONVERSION IN HETEROGENEOUS NETWORKS**
VERFAHREN ZUR ADRESSENÜBERSETZUNG IN EINEM GEMISCHTEN NETZWERK
PROCEDE DE CONVERSION D'ADRESSES DANS DES RESEAUX HETEROGENES

(30) Priority: 18.04.2002 DE 10217192
(43) Date of publication of application: 26.01.2005
(73) Proprietor: Philips Intellectual Property & Standards GmbH, 20099 Hamburg (DE); Koninklijke Philips Electronics N.V., 5621 BA Eindhoven (NL)
(72) Inventor: MONTVAY, A., Philips Intell. Propty. & Stnds. Gmbh, D-52066 Aachen (DE); KAHLERT, J., Philips Intell. Propty. & Stnds. Gmbh, D-52066 Aachen (DE)
(74) Representative: Meyer, Michael Josef
(86) International application number: PCT/IB2003/001496
(87) International publication number: WO 2003/088624

(56) References cited:
- JP-A- 2000 078 162

## Description

The invention relates to a method for address conversion in a network with at least two appliances. The invention further relates to a communications device for connecting networks of the same and different kinds.

In a network comprising network segments that use different kinds of communications protocols and addressing methods, conversion of the addresses is required in order to be able to speak to all network segments and to render distributed software within the network operational. Especially in digital domestic networks, data exchange between different kinds of network segments is necessary in order that a diverse functionality of the network is available to the user.

A number of address conversions in networks are known from the prior art. Conversion can hereby be realized by various methods. The known methods comprise either static conversion directives or a dynamic Table into which all addresses to be converted have to be entered.

The publication "An Ethernet Address Resolution Protocol" by David Plumer on the Internet site of the Internet Engineering Task Force, RFC 826, describes an address conversion using Tables. Each address to be converted is permanently allocated an address from the addressing method used, and this allocation is stored in a Table.

Document JP 2000078162 describes an address conversion method using bit mashing and bit inversion.

It is an object of the invention to provide a method and a communications device with which addresses of different kinds in a heterogeneous network are converted into a selected addressing method.

The object is achieved by a method of the kind specified above in that a first address from a first addressing method is converted into a second address from a second addressing method as follows:
- positions of the addresses at which all addresses of the second addressing method that are in use each exhibit at least one identical character are determined, and the character is designated a common character.
- an arbitrary amendment is made to at least one common character.
- the second address is formed from the common, amended characters and at least multiple characters from the first address.
- the common characters within the second address occur in the same positions as in all other addresses of the second addressing method.

In a heterogeneous network, neighboring network segments differ in respect of different kinds of addressing methods. A first addressing method uses addresses with a length of n characters, and a second addressing method uses addresses with a length of m characters, wherein the length m characters is greater than the length n characters. A method for converting a first address from the first addressing method into a second address from the second addressing method comprises multiple steps.

In the first step, those positions are determined at which all addresses of the second addressing method that are in use coincide, i.e. exhibit an identical and therefore common character. In the second step, an arbitrary amendment is undertaken on at least one of the characters. In the next step, a second address from the second addressing method is formed from the common, amended characters and the characters from the first address.

In forming the second address, the common characters with the undertaken amendment are placed in the same positions as in all other addresses from the second addressing method.

One particular advantage of the method is that it can be realized with a small hardware and software involvement. The method for address conversion hereby operates independently of standards, and may also be applied to addresses of future new addressing methods.

Since the second address may comprise a larger number of characters than the common characters together with the characters from the first address, unoccupied positions from the second address are occupied by arbitrary filler characters.

The filler characters may serve for specifying additional information. In the case where multiple different addressing methods are used, an item of additional information may, for instance, specify which of the addressing methods is involved, or it can be established by means of a check-sum whether conversion errors have occurred. Additional information may be given in relation to multiple kinds of amendment.

Also advantageous in respect of the method is the fact that it can be applied to addresses from any arbitrary system of characters or symbols. In the case of the binary numerical system, XOR functions may be used to determine identical binary characters of the addresses. An amendment of the binary characters may be undertaken by inverting one individual character or all the characters.

The invention also relates to a communications device for connecting networks of the same and different kinds with different addressing methods, which device converts a first address from a first addressing method into a second address from a second addressing method as follows:
- positions of the addresses at which all addresses of the second addressing method that are in use each exhibit at least one identical character are determined, and the character is designated a common character.
- an arbitrary amendment is made to at least one common character.
- the second address is formed from the common, amended characters and at least the characters from the first address, wherein the common characters within the second address occur in the same positions as in all other addresses of the second addressing method.

The invention also relates to a network with at least two appliances, which use different addressing methods, wherein a first address from a first addressing method is converted into a second address from a second addressing method as follows:
- positions of the addresses at which all addresses of the second addressing method that are in use each exhibit at least one identical character are determined, and the character is designated a common character.
- an arbitrary amendment is made to at least one common character.
- the second address is formed from the common, amended characters and at least the characters from the first address, and the common characters within the second address occur in the same positions as in all other addresses of the second addressing method.

The invention will be further described with reference to examples of embodiments shown in the drawings, to which, however, the invention is not restricted.
Fig. 1 shows the sequence of a communication during the addition of multiple new appliances in the form of a flowchart.
Fig. 2 shows the sequence of a determination of a bit mask in the form of a flowchart.
Fig. 3 shows the sequence of the mapping of an address into the bit mask in the form of a flow chart.

A heterogeneous network comprises two different network segments, which use two different addressing methods. Both addressing methods use addresses comprising multiple characters of a binary numerical system. The first addressing method (e.g. that in an IEEE 1394 bus system) uses addresses with a length of 48 bits. Addresses from the second addressing method (e.g. in the case of an Ethernet) each comprise 64 bits.

Firstly, a bit mask with a length of 64 characters is found, so a logic, character-wise AND-function with the bit mask supplies an identical masking result for every address from the second addressing method in use. The bit mask found must hereby not comprise more than (64-48) ones, and the ones must not occur with uniform distribution in the bit mask, but must be present in clusters in the fewest possible groups.

A bit mask determined from all addresses of the first addressing method runs: 11111 0000...00. The bit mask comprises 64 bits and fulfils two conditions. The first condition requires that a logic, bit-wise AND-function of the bit mask supplies an identical masking result with every address of the second addressing method that is in use. The masking result runs: 11001 00000...0000. The second condition allows not more than 16 bits with a value of one in the bit mask.

The masking result is inverted (00110 11111... 111). An address (010101... 01) from the first addressing method is converted in that the bits of the address to be converted are distributed over those bits occupied with a nought in the bit mask. For the remaining bits of the bit mask, the bits of the inverted masking result are set in such a way that a converted address 00110 010101... 01 000... 00 is obtained for the address to be converted.

The converted address comprises five bits of the inverted masking result (corresponding to the five ones in the bit mask), 48 bits of the address to be converted from the first addressing method and 11 remaining, unused bits, which are arbitrarily set at nought. If a sufficiently large number of noughts to distribute all characters of the address to be converted over these locations are present as characters in the bit mask, the unused characters are used for additional information.

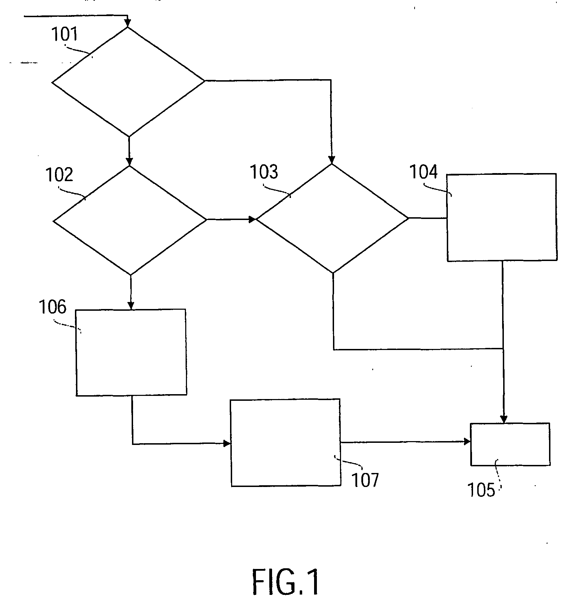

Fig. 1 shows the sequence of a process which is brought about through the addition of multiple new appliances in the heterogeneous network. This process may either takes place regularly or be initiated by an indication of the network that new appliances could be present. Once the new appliances have been introduced into the network with a new address, a check is made in decision block 101 as to whether one or more new appliances that belong to the second addressing method are present. If one of the new addresses is an address determined by the second addressing method, a verification is made in decision block 102 as to whether, owing to the addition of the new address, the first condition of the bit mask, namely that a logic, bit-wise AND function of the bit mask supplies an identical masking result with every address of the second addressing method that is in use, is still fulfilled.

In decision block 103, a check is made as to whether there are new addresses that correspond to the first addressing method. If this is the case, the new addresses are converted in block 104 in accordance with the method described above, and the process is terminated in block 105.

Should it transpire in decision block 103 that there are no new addresses that correspond to the first addressing method, the process is terminated in block 105.

Should the test in decision block 102 reveal, conversely, that, owing to the addition of the new addresses, the first condition of the bit mask is not fulfilled, a new bit mask is determined in block 106, and all addresses of the first addressing method are converted in block 107, using the new bit mask, in accordance with the method described above.

The bit mask can be determined in that a list is produced with all addresses present in the second addressing method. A first address from the list is combined with a second address from the list by a logic XOR-function. A result originating from the combining of the second address with the third address from the list by the XOR-function is combined with the result of the first XOR-function by an OR-function. All addresses entered in the list are correspondingly combined together by the XOR-function. Every result is in turn combined by the OR-function with the most recently determined result of the OR-function, so that, after the last combination of the OR-function, the inverted result corresponds with the bit mask sought.

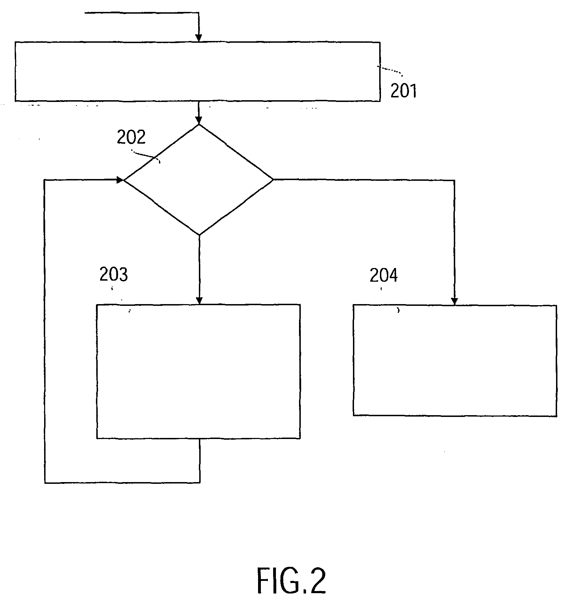

Fig. 2 represents the sequence during determination of the bit mask in that, for every two addresses of the second addressing method, those positions at which the two addresses differ are determined. To this end, a variable (LastAdr) is set in block 201 to equal a first address of the second addressing method (LastAdr: = first address of the first addressing method) and a second variable (B) is reserved to equal nought (B: = 0). A check is made in decision block 202 as to whether a further address of the second addressing method is present.

If this is the case, a third variable (Adr) is occupied by the further address (Adr: = further address) in block 203, and the third variable (Adr) is combined bit-wise with the first variable (LastAdr) by a logic XOR-function. The result of the combination is set to equal a fourth variable (A). In block 203, the first and second variables are also re-determined. The second variable (B) is set to equal a result of a logic OR-function between the original second variable (B) and the fourth variable (A) (B: = B OR A). The first variable (LastAdr) then corresponds to the third variable (LastAdr: = Adr) and a check is again made in decision block 202 as to whether a further address of the second addressing method is present.

In this manner, two addresses of the second addressing method are combined together by the logic XOR-function. A result of the combination is combined by an OR-function with a second result which originates from a previously determined combination of the OR-function.

Should the check in block 202 reveal that no further address from the second addressing method is present, the second variable (B) is inverted in block 204 and defined as a bit mask (M) (M: = NOT B). The current variable (LastAdr) is combined with bit mask (M) by an AND-function, and defined as the constant masking result C (C: = LastAdr AND M). The constant masking result is inverted (CN: = NOT C). Apart from bit mask (M), the inverted masking result (CN) is needed for the address conversion. If no bit mask containing a sufficiently great number of noughts as characters can be found, a further bit mask which is constant in all addresses from the first addressing method that have been used is sought in the first addressing method. The characters of the further bit mask are not set in the first bit mask. Owing to the further bit mask found, which is present constantly in every address of the first addressing method, fewer characters are needed for address conversion, and the efficiency of the method is increased.

Included in the method are the addresses of appliances (e.g. mobile appliances) which have already been included in the network in the past but do not currently belong to a network segment. These addresses are not deleted, but are stored and taken into account in the method. Should an appliance be re-introduced into the network, this does not result in a re-determination of the bit mask for the method.

Fewer registers are needed for the realization of the determination of the bit mask in terms of hardware. The complexity in gates is thereby constant and does not depend on the number of addresses present. Nor is there any need to operate with a complete Table.

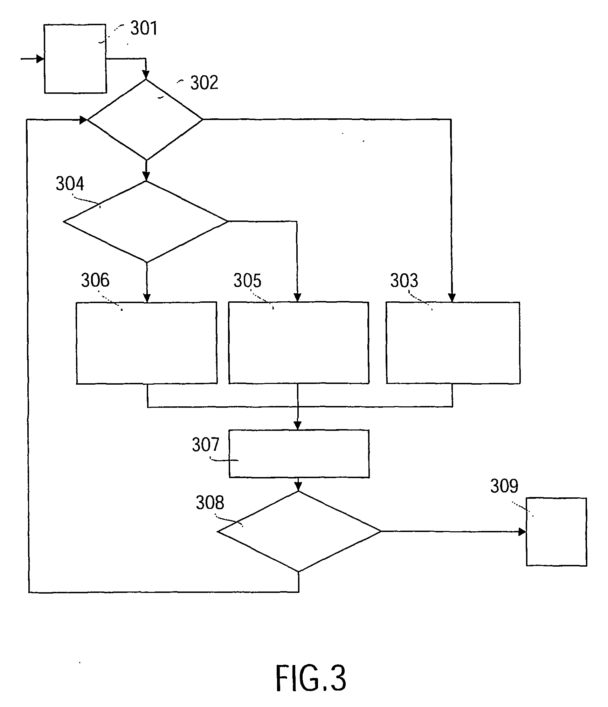

Fig. 3 shows the sequence of the mapping of an address to be converted into the bit mask in that the bits of the address to be converted are distributed over those bits that are occupied with a nought in the bit mask. For the remaining bits of the bit mask, the bits of the inverted result of the logic, bit-wise AND-function of the bit mask are set with every address from the second addressing method that is in use.

In block 301, a value is allocated in each case to a first variable (I) and a second variable (J) (I: = 1; J: = 1). The allocated value of the variable (I) corresponds to a bit position of the bit mask. The value of the variable (J) is a bit position of the address to be mapped. In decision block 302, a check is made as to whether a bit at the I-th position of the bit mask is occupied by a one or a nought.

If the bit is occupied by a one, the corresponding bit of the inverted result of the logic, bit-wise AND-combination of the bit mask is set in block 303 at the I-th position with every address from the second addressing method that is in use.

If the bit at the I-th position of the bit mask is occupied by a nought, a check is made in decision block 304 as to whether the length of an address of the first addressing method is smaller than the second variable (J), i.e. whether the entire address of the first addressing method has already been processed. If this is the case, the I-th position of the address of the second addressing method is set to nought in block 305.

If the length of the address of the first addressing method is equal to or greater than the second variable (J), i.e. there are still bits present that have to be mapped, the I-th position of the address of the second addressing method is occupied by the bit of the J-th position of the address of the first addressing method in block 306, and the value of the second variable (J) is increased by one position (J: = J+1).

In block 307, the value of the first variable (I) is increased by one position (I:=I+1) and a check is made in decision block 308 as to whether the variable is greater than the length of an address of the second addressing method. If the length of the address has been exceeded, the sequence is terminated in block 309.

In the event that the first variable (I) is equal to or smaller than the length of the address, the I-th position of the bit mask is checked in decision block 302.

## Claims

1. A method for address conversion in a network with at least two appliances that use different kinds of addressing methods, wherein a first address from a first addressing method is converted into a second address from a second addressing method **characterized by** the following steps:
positions of the addresses at which all addresses of the second addressing method that are in use each exhibit an identical character are determined, and the character is designated a common character,
an arbitrary amendment is made to at least one common character,
the second address is formed from the common characters with the undertaken amendments and at least multiple characters from the first address,
the common characters with the undertaken amendments within the second address are placed in the same positions as in all other addresses of the second addressing method.

2. A method as claimed in claim 1, **characterized in that** unoccupied positions from the second address are occupied by arbitrary filler characters.

3. A method as claimed in claim 2, **characterized in that** the filler characters are used for specifying additional information.

4. A method as claimed in claim 1, **characterized in that** the characters of the addresses are binary characters.

5. A method as claimed in claim 4, **characterized in that** an XOR function is executed to determine identical binary characters.

6. A method as claimed in claim 4, **characterized in that** an inversion is used to amend the binary characters.

7. A communications device connecting networks of the same and different kinds with different addressing methods, which device has means for converting a first address from a first addressing method into a second address from a second addressing method **characterized in that** it comprises:
means for determining positions of the addresses at which all addresses of the second addressing method that are in use each exhibit an identical character, and for designating the character a common character,
means for making an arbitrary amendment to at least one common character,
means for forming the second address from the common characters with the undertaken amendments and at least multiple characters from the first address, wherein the common characters with the undertaken amendments within the second address are placed in the same positions as in all other addresses of the second addressing method.

8. A network with at least two appliances, which use different addressing methods, wherein a first address from a first addressing method is converted into a second address from a second addressing method **characterized in that** it comprises:
means for determining positions of the addresses at which all addresses of the second addressing method that are in use each exhibit an identical character, and for designating the character a common character,
means for making an arbitrary amendment to at least one common character,
means for forming the second address from the common characters with the undertaken amendments and at least multiple characters from the first address, wherein the common characters with the undertaken amendments within the second address are placed in the same positions as in all other addresses of the second addressing method.

## Patentansprüche

1. Verfahren zur Adressübersetzung in einem Netzwerk mit wenigstens zwei Geräten, die unterschiedliche Adressierungsverfahren verwenden, wobei eine erste Adresse eines ersten Adressierungsverfahren in eine zweite Adresse eines zweiten Adressierungsverfahrens übersetzt wird, **gekennzeichnet durch** die nachfolgenden Verfahrensschritte:
Es werden Positionen der Adressen bestimmt, an denen alle in Benutzung befindlichen Adressen des zweiten Adressierungsverfahrens ein gleiches Zeichen aufweisen und das Zeichen als gemeinsames Zeichen bezeichnet wird,
an wenigstens einem gemeinsamen Zeichen wird eine beliebige Änderung vorgenommen,
die zweite Adresse wird aus den gemeinsamen Zeichen mit den durchgeführten Änderungen und wenigstens mehreren Zeichen der ersten Adresse gebildet, und
die gemeinsamen Zeichen mit den durchgeführten Änderungen innerhalb der zweiten Adresse werden an gleiche Positionen wie in allen anderen Adressen des zweiten Adressierungsverfahrens gesetzt.

2. Verfahren nach Anspruch 1, **dadurch gekennzeichnet, dass** nicht besetzte Positionen der zweiten Adresse mit beliebigen Füllzeichen besetzt werden.

3. Verfahren nach Anspruch 2, **dadurch gekennzeichnet, dass** die Füllzeichen zur Angabe zusätzlicher Informationen genutzt werden.

4. Verfahren nach Anspruch 1, **dadurch gekennzeichnet, dass** die Zeichen der Adressen Binärzeichen sind.

5. Verfahren nach Anspruch 4, **dadurch gekennzeichnet, dass** zur Bestimmung der übereinstimmenden Binärzeichen eine XOR Verknüpfung ausgeführt wird.

6. Verfahren nach Anspruch 4, **dadurch gekennzeichnet, dass** zur Änderung der Binärzeichen eine Invertierung angewandt wird.

7. Kommunikationsgerät, das Netzwerke von gleicher und verschiedener Art mit unterschiedlichen Adressierungsverfahren verbindet, das Mittel aufweist zum Übersetzen einer ersten Adresse eines erstes Adressierungsverfahren in eine zweite Adresse eines zweiten Adressierungsverfahrens, **dadurch gekennzeichnet, dass** das Gerät Folgendes umfasst:
Mittel zum Bestimmen von Positionen der Adressen, an denen alle in Benutzung befindlichen Adressen des zweiten Adressierungsverfahrens ein gleiches Zeichen aufweisen und zum Bezeichnen des Zeichens als gemeinsames Zeichen,
Mittel zum Durchführen einer beliebigen Änderung an wenigstens einem gemeinsamen Zeichen mit den durchgeführten Änderungen,
Mittel zum Bilden der zweiten Adresse aus den gemeinsamen Zeichen mit den durchgeführten Änderungen und wenigstens mehreren Zeichen der ersten Adresse, wobei die gemeinsamen Zeichen mit den durchgeführten Änderungen innerhalb der zweiten Adresse an gleiche Positionen wie in allen anderen Adressen des zweiten Adressierungsverfahrens gesetzt werden.

8. Netzwerk mit wenigstens zwei Geräten, die unterschiedliche Adressierungsverfahren verwenden, wobei eine erste Adresse eines ersten Adressierungsverfahrens in eine zweite Adresse eines zweiten Adressierungsverfahrens übersetzt wird, **dadurch gekennzeichnet, dass** dieses Netzwerk Folgendes umfasst:
Mittel zum Bestimmen von Positionen der Adressen, an denen alle in Benutzung befindlichen Adressen des zweiten Adressierungsverfahrens ein gleiches Zeichen aufweisen und zum Bezeichnen des Zeichens als gemeinsames Zeichen,
Mittel zum Durchführen einer beliebigen Änderung an wenigstens einem gemeinsamen Zeichen mit den durchgeführten Änderungen, und
Mittel zum Bilden der zweiten Adresse aus den gemeinsamen Zeichen mit den durchgeführten Änderungen und wenigstens mehreren Zeichen der ersten Adresse, wobei die gemeinsamen Zeichen mit den durchgeführten Änderungen innerhalb der zweiten Adresse an gleiche Positionen wie in allen anderen Adressen des zweiten Adressierungsverfahrens gesetzt werden.

## Revendications

1. Procédé de conversion d'adresses dans un réseau comprenant au moins deux appareils qui utilisent des types différents de procédés d'adressage, une première adresse provenant d'un premier procédé d'adressage étant convertie en une seconde adresse provenant d'un second procédé d'adressage, **caractérisé par** les étapes suivantes :
- des positions des adresses sont déterminées, sur lesquelles toutes les adresses du second procédé d'adressage qui sont utilisées présentent chacune un caractère identique, et le caractère est désigné comme étant un caractère commun;
- une modification arbitraire est effectuée sur au moins un caractère commun;
- la deuxième adresse est formée à partir des caractères communs présentant les modifications entreprises, et d'au moins plusieurs caractères provenant de la première adresse, et
les caractères communs présentant les modifications entreprises à l'intérieur de la deuxième adresse sont placés sur les mêmes positions que toutes les autres adresses provenant du second procédé d'adressage.

2. Procédé suivant la revendication 1, **caractérisé en ce que** des positions inoccupées provenant de la seconde adresse sont occupées par des caractères de remplissage arbitraires.

3. Procédé suivant la revendication 2, **caractérisé en ce que** les caractères de remplissage sont utilisés pour spécifier des informations supplémentaires.

4. Procédé suivant la revendication 1, **caractérisé en ce que** les caractères des adresses sont des caractères binaires.

5. Procédé suivant la revendication 4, **caractérisé en ce qu'**une fonction OU-exclusif est exécutée afin de déterminer des caractères binaires identiques.

6. Procédé suivant la revendication 4, **caractérisé en ce qu'**une inversion est utilisée pour modifier les caractères binaires.

7. Dispositif de télécommunications reliant des réseaux de types identiques et différents à des procédés d'adressage différents, lequel dispositif comprend des moyens destinés à convertir une première adresse provenant d'un premier procédé d'adressage en une deuxième adresse provenant d'un second procédé d'adressage, **caractérisé en ce qu'**il comprend :
- des moyens destinés à déterminer des positions des adresses sur lesquelles toutes les adresses du second procédé d'adressage qui sont utilisées présentent chacune au moins un caractère identique, et destinés à désigner le caractère comme étant un caractère commun;
- des moyens destinés à effectuer une modification arbitraire sur au moins un caractère commun, et
- des moyens destinés à former la deuxième adresse à partir des caractères communs présentant les modifications entreprises, et d'au moins plusieurs caractères provenant de la première adresse, les caractères communs présentant les modifications entreprises à l'intérieur de la deuxième adresse étant placés aux mêmes positions que dans toutes les autres adresses du second procédé d'adressage.

8. Réseau comprenant au moins deux appareils qui utilisent différents procédés d'adressage, une première adresse provenant d'un premier procédé d'adressage étant convertie en une seconde adresse provenant d'un second procédé d'adressage, **caractérisé en ce qu'**il comprend :
- des moyens destinés à déterminer des positions des adresses sur lesquelles toutes les adresses du second procédé d'adressage qui sont utilisées présentent chacune au moins un caractère identique, et destinés à désigner le caractère comme étant un caractère commun;
- des moyens destinés à effectuer une modification arbitraire sur au moins un caractère commun, et
- des moyens destinés à former la deuxième adresse à partir des caractères communs présentant les modifications entreprises, et d'au moins plusieurs caractères provenant de la première adresse, les caractères communs présentant les modifications entreprises à l'intérieur de la deuxième adresse étant placés aux mêmes positions que dans toutes les autres adresses du second procédé d'adressage.
